# EUROPÄISCHE PATENTSCHRIFT

(11) **EP 0 782 722 B1**
(45) Veröffentlichungstag und Bekanntmachung des Hinweises auf die Patenterteilung: **17.06.1998**
(21) Anmeldenummer: 95931135.8
(22) Anmeldetag: 14.09.1995
(51) Int. Cl.: G05B 19/418

(54) **VERFAHREN UND VORRICHTUNG ZUR STEUERUNG UND AKTIVIERUNG VON MITEINANDER MITTELS EINES BUSSYSTEMS VERNETZTEN SENSOREN UND/ODER AKTUATOREN**
PROCESS AND DEVICE FOR CONTROLLING AND ACTIVATING SENSORS AND/OR ACTUATORS THAT ARE LINKED BY A BUS SYSTEM
PROCEDE ET DISPOSITIF PERMETTANT DE COMMANDER ET D'ACTIVER DES DETECTEURS ET/OU DES ORGANES D'ACTIONNEMENT RELIES PAR UN SYSTEME DE BUS

(30) Priorität: 15.09.1994 DE 4433013
(43) Veröffentlichungstag der Anmeldung: 09.07.1997
(60) Teilanmeldung: 97201131.6
(73) Patentinhaber: Bihl, Jochen, 68623 Lampertheim (DE); Wiedemann, Bernhard, 68161 Mannheim (DE)
(72) Erfinder: Bihl, Jochen, 68623 Lampertheim (DE); Wiedemann, Bernhard, 68161 Mannheim (DE)
(74) Vertreter: Mierswa, Klaus, Dipl.-Ing.
(86) Internationale Anmeldenummer: DE9501261
(87) Internationale Veröffentlichungsnummer: WO9608753

(56) Entgegenhaltungen:
- ELEKTRONIK, Bd. 43, Nr. 12, 14.Juni 1994 DE, Seiten 64-68, FLASCHKA 'Binäre Sensoren am Bus'
- MICROPROCESSING AND MICROPROGRAMMING, Bd. 40, Nr. 10-12, Dezember 1994 NL, Seiten 879-882, SVEDA ET AL 'ASI Instrumentation'
- ELEKTRIE, Bd. 46, Nr. 12, 1992 DE, Seiten 528-532, HEIMBOLD ET AL 'Digitale Kommunikation im Sensor-Aktuator-Bereich'

## Beschreibung

### Technisches Gebiet:

Die Erfindung betrifft ein Verfahren zur Steuerung und Aktivierung von miteinander mittels eines Bussystems vernetzten binären Sensoren und/oder Aktuatoren (ASI-Slaves), die von einem Verarbeitungsrechner angesteuert werden gemäß dem Oberbegriff des Patentanspruchs 1 sowie eine Vorrichtung zur Durchführung des Verfahrens gemäß dem Oberbegriff des Anspruchs 11.

### Stand der Technik:

Bisher war es bei Feldbussystemen aus Kosten- und Platzgründen nicht möglich, binäre Sensoren oder Aktuatoren direkt busfähig zu machen. Durch hochintegrierte Technologien können heute Sensoren neben dem eigentlichen Schaltzustand noch weitere Funktionen liefern, die Einstell- und Diagnosemöglichkeiten der Sensoren oder Aktuatoren bieten; diese Funktionen mußten bisher durch zusätzliche Leitungen und damit zusätzlichem Verdrahtungsaufwand realisiert werden. Um diese Nachteile zu beheben, wurde der Aktuator-Sensor-Interface-Standard, ASI-Standard genannt, geschaffen, der ein Feldbuskonzept darstellt, mit dem binäre Aktuatoren und Sensoren mit der untersten bzw. ersten Steuerungsebene verknüpft werden, um sie kommunikationsfähig zu machen. Das Aktuator-Sensor-Interface ersetzt dabei den Kabelbaum, Verteilerschränke, Klemmleisten usw. durch ein einfaches Zweileiter-Flachbandkabel, über das ASI-Daten mit den Peripherie-Elementen ausgetauscht werden und das diese zugleich mit Energie versorgt. Mit einem sogenannten separaten ASI-Anschluß in Form eines standardisierten Moduls, der Teil der Busstruktur ist, macht ASI zunächst einmal die meisten konventionellen Peripherie-Elemente busanschlußfähig. Beim integrierten ASI-Anschluß befindet sich hingegen in einem Gerät ein sogenannter Slave-Baustein, der dadurch selbst busfähig ist (ASI-Verein in: Sonderdruck aus Feldbussysteme für die Investitionsgüterindustrie, Herausgeber VDMA, Frankfurt 1992, Stand 3.12.1992 sowie Druckschrift: Fabrikautomation VariNet-A Aktuator-Sensor-Interface Katalog Sensorsysteme 5, Ausgabe 1994, Herausgeber: Pepperl + Fuchs GmbH, 68301 Mannheim; sowie Druckschrift: ASI: Das Aktuator-Sensor-Interface für die Automation, herausgegeben von Werner Kriesel und Otto Madelung, Hanser-Verlag 1994).

Der Master, ASI-Master genannt, übernimmt alle Aufgaben, die für die Abwicklung des Busbetriebs der Slaves notwendig sind einschließlich von Aufgaben der Initialisierung und der Diagnose. Über den ASI-Master ist an den Feldbus ein übergeordneter Verarbeitungsrechner, wie speicherprogrammierbare Steuerung oder Bus-Rechner oder PC oder VME-Busrechner, angeschlossen, dem sämtliche Signale aller ASI-Slaves zugeführt werden, wobei der ASI-Master gewährleistet, daß die Signale dem Verarbeitungsrechner in einem festen Zeitrahmen zur Verfügung gestellt werden und umgekehrt die Steuerungsbefehle des Verarbeitungsrechners den ASI-Slaves aufgegeben werden. Der ASI-Master stellt außerdem sicher, daß hinzugekommene Slaves erkannt und ausgefallene Slaves an den Verarbeitungsrechner gemeldet werden; der ASI-Master paßt somit die ASI-Funktionen der Slaves an das externe Verarbeitungssystem des Verarbeitungsrechners an. Der ASI-Master besitzt für die Bearbeitung dieser Aufgaben normalerweise einen Controller, der ein enges Zeitraster einhalten muß. Die Bitzeit bei ASI beträgt 6 µsec (Mikrosekunden), wobei der Controller zyklisch alle 150 µsec ein komplettes ASI-Telegramm auswerten muß. Zu jedem Zeitpunkt kann eine Situation auftreten, bei der ASI-Master den ASI-Kreis in einen sicheren Zustand versetzen muß. Diese Forderung macht es bisher notwendig, daß der ASI-Master getrennt vom Verarbeitungsrechner realisiert ist in Form von zwei physikalisch getrennten Geräten, die mit einer bidirektionalen Kommuni-kationsverbindung verbunden sind. Die Verbindung zwischen Verarbeitungs-rechner und ASI-Master kann zum Beispiel ein Rückwandbus, eine serielle Schnittstelle oder ein beliebiger Feldbus o.ä. sein. Dieser Geräteaufwand begrenzt in physikalischer Hinsicht die Einsatzfähigkeit eines derartigen ASI-Masters, da zusätzlich der Verarbeitungsrechner mit dem ASI-Master verbunden sein muß.

### Technische Aufgabe:

Der Erfindung liegt die Aufgabe zugrunde, ein Verfahren und eine Vorrichtung der eingangs genannten Gattung anzugeben, mit der der elektrische Aufwand, insbesondere Verdrahtungs- und Steuerungsaufwand, für die Realisierung des Verarbeitungsrechners und des ASI-Masters vereinfacht werden kann, um einen schnelleren und sicheren Busbetrieb zu gewährleisten und die Kosten für einen ASI-Master und einen Verarbeitungsrechner zu reduzieren; daneben soll dazu die freie Rechenleistung eines ASI-Master, die überwiegend nicht benötigt wird, für die Implementierung eines Verarbeitungsrechners verwendet werden können, ohne die strengen ASI-Spezifikationen zu verletzen; wobei allgemein die ASI-Daten und die ASI-Flags zwischen dem Verarbeitungsrechner und dem ASI-Master ohne Dateninkonsistenz übertragen werden sollen.

### Offenbarung der Erfindung und deren Vorteile:

Die Lösung der Aufgabe besteht beim erfindungsgemäßen Verfahren darin, daß der ASI-Master zusammen mit dem Verarbeitungsrechner in einem Gerät realisiert ist und wenigstens Teile der ASI-Mastersoftware zusammen mit der Verarbeitungsrechnersoftware auf demselben Controller implementiert sind, wobei die Verarbeitungsrechnersoftware die im Mittel von der ASI-Mastersoftware zum Einhalten der ASI-Spezifikationen nicht benötigte Rechen-eistung des gemeinsamen Controllers verwendet und die ASI-Mastersoftware immer Priorität vor der Verarbeitungsrechnersoftware besitzt zur Sicherstellung, daß die strengen Zeitanforderungen an den ASI-Master eingehalten werden. Vorteilhaft kann die ASI-Mastersoftware von der Verarbeitungsrechnersoftware entkoppelt aufgebaut sein wie die ASI-Mastersoftware sowie die Verarbeitungsrechnersoftware jeweils nur auf die jeweiligen lokalen Variablen zugreifen können, jedoch zwischen beiden ein Datenaustausch stattfinden kann. Der Verarbeitungsrechner kann somit als autarker Verarbeitungsrechner sogar innerhalb des ASI-Masters integriert, aber getrennt aufgebaut sein.

Dieses Verfahren besitzt den Vorteil, daß der Verarbeitungsrechner als autarker Verarbeitungsrechner und der ASI-Master in ein- und-demselben Gerät integriert sind, der sogenannte ASI-Steuermaster, weshalb Zuleitungen zwischen beiden Geräten entfallen. Erfindungsgemäß erledigt der ASI-Steuermaster Verarbeitungsaufgaben, für die bei konventioneller Realisierung des Standes der Technik ein Verarbeitungsrechner zusätzlich erforderlich ist. Dieser ist in der Lage, Aufgaben des Verarbeitungsrechners und ASI-Masteraufgaben zu übernehmen. Es ist möglich, daß Verarbeitungsrechner wie ASI-Master auf denselben Controller zurückgreifen, wobei jedoch immer gewährleistet ist, daß die ASI-Master-Software immer die höhere Priorität gegenüber der Verarbeitungsrechnersoftware besitzt. Dadurch können Eingangssignale in einem Gerät direkt mit Ausgangssignalen verknüpft werden. Die logische Verbindung verschiedener Eingänge und/oder Ausgänge kann einen Ausgang und/oder Eingang schalten und umgekehrt. Nach dem Start des Anwenderprogramms des Verarbeitungsrechners, ASI-Steuermaster-Programm genannt, kann der ASI-Steuermaster autark die am ASI-Kreis angeschlossenen Slaves bzw. Anlagen steuern, so daß neben den Aufgaben des ASI-Masters, die mit denen des modernen Verkabelungssystems zu vergleichen sind, auch Steuerungsaufgaben der angeschlossenen Anlagen abgearbeitet werden können.

Der ASI-Master bzw. die ASI-Mastersoftware darf die Zykluszeit der Verarbeitungsrechnersoftware ändern. Lediglich der ASI-Master tauscht über eine eigene Schnittstelle nach außerhalb des ASI-Steuermasters ASI-Daten mit den ASI-Slaves aus, wobei der Verarbeitungsrechner die ASI-Daten des Verarbeitungsrechners mit dem ASI-Master austauscht, der wiederum für den gesamten Datenaustausch mit den ASI-Slaves sorgt; der Datenaustausch mit den ASI-Slaves wird vom ASI-Master bedient. Der Verarbeitungsrechner übergibt die ASI-Daten der Verarbeitungsrechnersoftware an den ASI-Master, der wiederum für das Weiterleiten der ASI-Daten und den Datenaustausch mit den ASI-Slaves sorgt.

Der ASI-Kreis wird vorteilhaft bei Fehlprogrammierung der Verarbeitungsrechnersoftware weiterhin spezifikationskonform betrieben, so daß eine Fehlerprogrammierung den Ablauf der ASI-Mastersoftware des ASI-Masters nicht beeinflußt, wobei der ASI-Master den ASI-Kreis unabhängig vom Zustand der Verarbeitungsrechnersoftware in einen sicheren Zustand zu versetzen imstande ist. Des weiteren ist der Verarbeitungsrechner auf kurzzeitige ASI-Fehler in einer vorgegebenen Art und Weise in der Verarbeitungsrechnersoftware zu reagieren imstande. Der zyklische Aufruf der ASI-Mastersoftware kann mit Hilfe eines Watchdog überwacht werden. Wird dem ASI-Master beispielsweise über den Watchdog gemeldet, daß sich das Steuerprogramm in einer Endlosschleife befindet, dann kann der ASI-Master den ASI-Kreis in einen sicheren Zustand versetzen. Ein sicherer und gefahrloser Zustand bei ASI ist beispielsweise die Offline-Phase. In der Offline-Phase wird zuerst an allen ASI-Slaves ein RESET durchgeführt und danach wird die Kommunikation auf der ASI-Leitung eingestellt. Nach dem RESET und dem Einstellen der Kommunikation besteht keine weitere Gefahr für eine Anlage.

Damit die unterschiedlichen Aufgaben des ASI-Masters und des Verarbeitungsrechners fehlerfrei unabhängig voneinander durchgeführt werden können, werden erfindungsgemäß innerhalb des ASI-Steuermasters die Prozeßdaten zweimal unabhängig voneinander abgelegt und verwaltet, wobei die ASI-Mastersoftware und die Verarbeitungsrechnersoftware immer nur auf ihren zugewiesenen eigenen Datenbereich zugreifen kann und die ASI-Daten der beiden Softwareteile zu vorgebbaren Zeitpunkten ausgetauscht werden. Damit ist gewährleistet, daß die Verarbeitungsrechnersoftware fehlerfrei arbeitet, auch wenn zu einem beliebigen Zeitpunkt Veränderungen im ASI-Kreis auftreten. Das bedeutet, daß die beiden internen Prozesse, nämlich ASI-Master und Verarbeitungsrechner, eine definierte Schnittstelle besitzen müssen und die Prozesse entkoppelt sind.

Tritt unabhängig vom Zustand des Verarbeitungsrechnersoftware beispielsweise ein ASI-Power-Fail, wie Leistungsausfall auf dem Bus auf, dann wird der ASI-Steuermaster sofort in die Offline-Phase versetzt und zwar unabhängig vom Zustand der Verarbeitungsrechnersoftware. Fällt ein ASI-Slave aus, dann wird der Slave vom ASI-Master aus der Liste der erkannten Slaves gestrichen und die Daten- und Parameterwerte des Slaves in der ASI-Mastersoftware werden beispielsweise mit Defaultwerten beschrieben, was unabhängig vom Zustand der Verarbeitungsrechnersoftware geschieht.

Erkennt der ASI-Master zu einem beliebigen Zeitpunkt einen Fehler, dann können die entsprechenden ASI-Flags spezifikationskonform beschrieben werden. Zusätzlich zu den ASI-Flags kann beispielsweise ein globales ASI-Fehlerbit gesetzt werden, welches nur vom ASI-Master gesetzt und nur von der Verarbeitungsrechnersoftware gelöscht werden darf. Ein vom ASI-Master erkannter Fehler wird für den Verarbeitungsrechner gespeichert. Durch das Speichern von Fehlern wird eine Konsistenz der ASI-Daten beim Datenaustausch zwischen dem Verarbeitungsrechner und dem ASI-Master erreicht. Der Verarbeitungsrechner kann auf kurzzeitige ASI-Fehler in einer in der Verarbeitungsrechnersoftware vorgegebenen Art und Weise reagieren.

Vor dem Datenaustausch zwischen der ASI-Mastersoftware und der Verarbeitungsrechnersoftware wird überprüft, ob ein Fehler vorliegt. Bei Nichtvorliegen eines Fehlers werden die ASI-Daten der beiden Softwareteile, nämlich ASI-Mastersoftware und Verarbeitungsrechnersoftware, ausgetauscht und als neue gültige ASI-Daten akzeptiert, hingegen gehen bei Vorliegen eines Fehlers beide Prozesse in die jeweilige Fehlerbehandlung über und verwerfen die ausgetauschten ASI-Daten als fehlerhaft. Nach beendetem Datenaustausch wird erneut eine Fehlerprüfung durchgeführt, ob nun aktuell ein Fehler vorliegt oder ob in der Vergangenheit, angezeigt durch das ASI-Fehlerbit, zwischenzeitlich ein Fehler aufgetreten ist. Im Fehlerfall gehen die Prozesse in die Fehlerbehandlung über und verwerfen die ausgetauschten ASI-Daten, ohne Fehler werden die übertragenen ASI-Daten als gültig akzeptiert und der Datenaustausch ist beendet, wobei bis zum nächsten Datenaustausch beide Prozesse autark arbeiten.

Erfindungsgemäß hat dazu im ASI-Steuermaster der implementierte ASI-Master gegenüber dem implementierten Verarbeitungsrechner immer und zu jedem Zeitpunkt die höhere Priorität. Der zeitliche Ablauf des ASI-Masters darf zu keinem Zeitpunkt und unter keinen Umständen durch den implementierten Verarbeitungsrechner verändert, gebremst oder unterbrochen werden. Demgegenüber kann der ASI-Master bzw. die ASI-Mastersoftware den implementierten Verarbeitungsrechner zu jedem Zeitpunkt unterbrechen; der ASI-Master bzw. die ASI-Mastersoftware ist somit imstande, die Zykluszeit der Verarbeitungsrechnersoftware zu ändern, die veränderlich sein kann. Reaktionen des internen ASI-Masters auf Fehler werden in einem Zeitraster, vorzugsweise festes Zeitraster, durchgeführt.

Bei vielen Verarbeitungsrechnern ist eine variable Zykluszeit problematisch, da beispielsweise in Maschinen und Anlagen die Reaktionszeit vor allem auf Fehlerzustände kalkulierbar und im Vorhinein bekannt sein muß. Die Zykluszeit der Verarbeitungsrechnersoftware in einem ASI-Steuermaster ist im Normalfall konstant und wird nur in Fehlerzuständen stark verändert. In Fehlerzuständen sorgt jedoch der ASI-Master dafür, daß eine Maschine oder Anlage in klar spezifizierter Art und Weise in einen sicheren Betriebszustand versetzt wird. Bei Fehlerzuständen versetzt der ASI-Master den ASI-Kreis in einen sicheren Zustand und solange kein Fehlerzustand vorliegt ist die Zykluszeit des Verarbeitungsrechners annähernd konstant.

Die ASI-Spezifikation, in der die Anforderungen an einen ASI-Master nach heutigem Stand der Technik beschrieben sind, schreibt Ablauf und Reaktionszeiten für verschiedene Zustände im ASI-System streng vor. Dabei ist der Rechenzeitbedarf für die verschiedenen Zustände sehr unterschiedlich, nur sehr wenige ASI-Systemzustände sind im ASI-Master aufwendig zu bearbeiten. Sehr zeitaufwendig ist beispielsweise die Abarbeitung von Fehlerzuständen im ASI-System oder die automatische Aufnahme von zusätzlich angeschlossenen ASI-Slaves in den korrekten Betrieb. Die aufwendig zu bearbeitenden ASI-Systemzustände können nach heutigem Stand der Technik nicht vereinfacht werden, ohne wesentliche Einschränkungen in der Betriebssicherheit und im Kompfort des ASI-Systems in kauf zu nehmen.

Die aufwendig zu bearbeitenden ASI-Systemzustände kommen im realen Betrieb eines ASI-Systems nur sehr selten vor. Sie sind jedoch ausschlaggebend für den minimalen Leistungsbedarf in einem ASI-Master.

Um die ASI-Spezifikation einhalten zu können, werden heute leistungsstarke Controller verwendet, die in heutigen Applikationen nicht ausgelastet und die so ausgelegt sind, daß die aufwendigen ASI-Systemzustände in der spezifizierten Zeit vom Master abgearbeitet werden können. Entscheident für die notwendige Leistungsfähigkeit der Controller in einem ASI-Master sind "worst case" ASI-Systemzustände.

Durch das erfindungsgemäße Verfahren kann die freie Rechenleistung eines ASI-Master, die überwiegend nicht benötigt wird, für andere Aufgaben verwendet werden, ohne die strenge ASI-Spezifikation zu verletzen. Durch Einsatz des Verfahrens kann beispielsweise ein Verarbeitungsrechner im ASI-Master integriert werden, ohne daß dafür zusätzliche Hardwarekosten entstehen. Beispiele für Verarbeitungsrechner sind speicherprogrammierbare Steuerungen, SPS's, PC's, andere Feldbusteilnehmer oder ein einen Controller beinhaltendes Gerät.

Der Datenaustausch zwischen ASI-Master und Verarbeitungsrechner geschieht in einer Art und Weise, daß Datenkonsistenz sichergestellt ist, wozu beim Austausch zwischen ASI-Master und Verarbeitungsrechner zur Sicherstellung der Konsistenz zwischen ASI-Daten und ASI-Flags der ASI-Master die ASI-Daten und die ASI-Flags vor der Übertragung zum Verarbeitungsrechner einfriert, also nicht mehr verändert, zum Beispiel zwischenspeichert, und diese so zueinander konsistenten ASI-Daten und ASI-Flags an den Verarbeitungsrechner überträgt.

Dazu kann bei einer Fehlererkennung durch den ASI-Master, was allgemein der Fall sein kann, ein zusätzliches Fehlerbit gesetzt werden, das nur vom ASI-Master gesetzt werden und nur vom Verarbeitungsrechner gelöscht bzw. quittiert werden darf, und Fehler gespeichert werden, wobei durch das Speichern von Fehlern durch die Verarbeitungsrechnersoftware eine Konsistenz der ASI-Daten beim Datenaustausch zwischen dem oder den Verarbeitungsrechnern und dem ASI-Master erreicht wird.

Bei einer Vorrichtung zur Steuerung und Aktivierung von miteinander mittels eines Bussystems vernetzten binären Sensoren und/oder Aktuatoren (ASI-Slaves), mit einem ASI-Master zur Bedienung des Bussytems und einem Verarbeitungsrechner zur Verarbeitung der ASI-Daten des ASI-Masters ist erfindungsgemäß der ASI-Master zusammen mit dem Verarbeitungsrechner in einem Gerät realisiert und wenigstens Teile der ASI-Mastersoftware zusammen mit der Verarbeitungsrechnersoftware auf demselben Controller implementiert, wobei die Verarbeitungsrechnersoftware die im Mittel von der ASI-Master-software zum Einhalten der ASI-Spezifikationen nicht benötigte Rechenleistung des gemeinsamen Controllers zu verwenden imstande ist und die ASI-Master-software immer Priorität vor der Verarbeitungsrechnersoftware besitzt zur Sicherstellung der strengen Zeitanforderungen an den ASI-Master, die ASI-Mastersoftware ist entkoppelt von der Verarbeitungsrechnersoftware aufgebaut und die ASI-Mastersoftware sowie die Verarbeitungsrechnersoftware sind imstande, jeweils nur auf die jeweiligen lokalen Variablen zuzugreifen, jedoch findet ein Datenaustausch zwischen beiden statt.

Der ASI-Master und der Verarbeitungsrechner können in einem Gerät, jedoch auf zwei verschiedenen Controllern realisiert sein. Des weiteren kann mehr als ein Verarbeitungsrechner vorhanden sein und ein ASI-Master mit den mehreren Verarbeitungsrechnern zusammenarbeiten.

Dadurch wird der elektrische Aufwand, insbesondere der Verdrahtungs- und Steuerungsaufwand, bei der erfindungsgemäßen Vorrichtung gegenüber dem heutigen Stand der Technik, bei dem Verarbeitungsrechner und des ASI-Master in zwei Geräten angeordnet sind, erheblich vereinfacht.

Das Verfahren der Sicherstellung der Datenkonsistenz gilt ganz allgemein. Denn beim Einsatz des Bussystems nach heutigem Stand der Technik und nach heutigem Stand der ASI-Spezifikationen können Dateninkonsistenzen zwischen den Eingangsdaten und den ASI-Flags auftreten. Nach heutigem Stand der Technik wird im ASI-Master eine Funktion verwendet, um die Eingangsdaten vom ASI-Master einzulesen und an einen Verarbeitungsrechner zu übertragen.

Deshalb kann zur Steuerung und Aktivierung von miteinander mittels eines Bussystems vernetzten binären Sensoren und/oder Aktuatoren (ASI-Slaves), wobei die Bedienung des Bussystems von einem ASI-Master und die Verarbeitung der ASI-Daten von einem Verarbeitungsrechner durchgeführt wird und der ASI-Master und der Verarbeitungsrechner ASI-Daten und ASI-Flags miteinander austauschen und beim Austausch die Konsistenz zwischen ASI-Daten und ASI-Flags sichergestellt wird, erfindungsgemäß so verfahren werden, daß der ASI-Master die ASI-Daten und die ASI-Flags vor der Übertragung zum Verarbeitungsrechner einfriert, also nicht mehr verändert, oder zum Beispiel zwischenspeichert, und diese zueinander konsistenten ASI-Daten und ASI-Flags an den Verarbeitungsrechner überträgt.

Vorzugsweise überträgt der ASI-Master zuerst ASI-Daten und anschließend die ASI-Flags, wobei der ASI-Master dabei sicherstellen kann, daß die ASI-Flags während der Abarbeitung der Übertragungsfunktion nicht auf "ok" sondern nur auf "false" gesetzt werden können. Damit wird gewährleistet, daß der Verarbeitungsrechner keine Fehler überliest.

Der ASI-Master speichert die ASI-Daten und die ASI-Flags zum gleichen Zeitpunkt bzw. unmittelbar hintereinander intern zwischen, wobei während der Übertragung zum Verarbeitungsrechner keine Veränderungen der ASI-Daten und die ASI-Flags nicht mehr stattfinden. Der ASI-Master kann die ASI-Daten und die ASI-Flags zusammen in einer Funktion oder in verschiedenen Funktionen an den Verarbeitungsrechner übertragen. Der ASI-Master kann die ASI-Flags in einer Funktion prüfen und bei fehlerfreiem Zustand auf "ok" setzen, wobei diese Funktion nicht asynchron zur Übertragung der ASI-Daten und ASI-Flags zum Verarbeitungsrechner bearbeitet werden darf bzw. bearbeitet wird.

Nach heutigem Stand der Technik verwendet man im ASI-Master eine Funktion, um die Eingangsdaten vom ASI-Master einzulesen und an einen Verarbeitungsrechner zu übertragen sowie eine zweite Funktion, um die ASI-Flags an einen Verarbeitungsrechner zu übertragen wie folgt:
Status = Eingangsdatenabbild_lesen() [Funktion]

| | | |
|---|---|---|
| Argument | Argumentwert | Beschreibung |
| --- | --- | --- |
| Resultat | Resultatwert | Beschreibung |
| Abbild | ASI-Daten | Enthält die Zustände an den Eingängen der aktiven Slaves und Default-Daten bei inaktiven Slaves |
| Status | Zeigt das Ergebnis der Funktion an | |
| | OK | Die ASI-Daten konnten gelesen werden |
| | NOK | Die ASI-Daten konnten nicht gelesen werden |

Im Eingansdatenabbild stehen Default-Daten bei inaktiven Slaves. Die Default-Daten können im Verarbeitungsrechner nicht mehr von realen Eingangs zuständen unterschieden werden.

Eine zweite Funktion im ASI-Master liest die ASI-Flags im ASI-Master ein und überträgt die ASI-Flags zum Verarbeitungsrechner:
Status = ASI-Flags_lesen() [Funktion]

| | | |
|---|---|---|
| Argument | Argumentwert | Beschreibung |
| --- | --- | --- |
| Resultat | Resultatwert | Beschreibung |
| Status | Zeigt das Ergebnis | der Funktion an |
| | OK | Die ASI-Daten konnten gelesen werden |
| | NOK | Die ASI-Daten konnten nicht gelesen werden |
| ASI-Flags | | Enthält die ASI-Flags der Ablaufkontrollebene |

Die ASI-Flags enthalten die Information über den Betriebszustand des Bussystems. Fehlerzustände wie Spannungseinbruch oder das Fehlen von ASI-Slaves wird über die ASI-Flags vom Master zum Verarbeitungsrechner gemeldet. Damit besteht ein zeitlicher Versatz zwischen dem Zugriff auf die Eingangsdaten und dem Zugriff auf die ASI-Flags. Innerhalb dieses zeitlichen Versatzes kann sich der Betriebszustand des Systems ändern.

Die ASI-Daten und die ASI-Flags werden im ASI-Master gleichzeitig oder unmittelbar hintereinander ohne Unterbrechnung durch eine andere Funktion aktualisiert.

### Beispiel:

Der Verarbeitungsrechner liest zuerst die ASI-Flags und anschließend die Eingangsdaten ein usw..
Zeitlicher Ablauf: (t: Zeit, t1, t2, t3, t4... )
- t1:: Das ASI-System arbeitet fehlerfrei.
- t2:: Der Verarbeitungsrechner liest die ASI-Flags und bekommt die Information, daß das ASI System korrekt arbeitet.
- t3:: Das ASI-System hat einen Fehler, beispielsweise fällt ein ASI-Slave aus.
- t4:: Der ASI-Master erkennt den Fehler, aktualisiert die ASI-Flags und überschreibt beispielsweise die Eingangsdaten eines ausgefallenen ASI-Slaves mit Default-Daten.
- t5:: Der Verarbeitungsrechner liest die Eingangsdaten. Der Verarbeitungsrechner empfängt beispielsweise für einen ausgefallenen ASI-Slave Default-Daten.
- t7:: Das ASI-System arbeitet fehlerfrei.
- t8:: Der Verarbeitungsrechner liest die ASI-Flags und bekommt die Information, daß das ASI-System korrekt arbeitet.

Der Verarbeitungsrechner würde in diesem Beispiel mit fehlerhaften Prozeß- oder Default-Daten arbeiten, ohne den Fehler im ASI-System zu erkennen.

Kurzbeschreibung der Zeichnung, in der zeigen:
- Figur 1: die Implementierung eines ASI-Masters und eines Verarbeitungsrechners in einem ASI-Steuermaster
- Figur 2: die prinzipielle Arbeitsweise des ASI-Steuermasters mittels des implementierten ASI-Masters und des implementierten Verarbeitungsrechners
- Figur 3: den zeitlichen Ablauf der Verarbeitungsrechnersoftware
- Figur 4: die Aufteilung der Rechenzeit auf die beiden asynchronen Prozesse des ASI-Masters und des Verarbeitungsrechners bei der Realisierung des ASI-Steuermasters mit einem einzigen Controller und
- Figur 5: ein Beispieldiagramm für den Datenaustausch.

### Bevorzugte Ausführungsform der Erfindung:

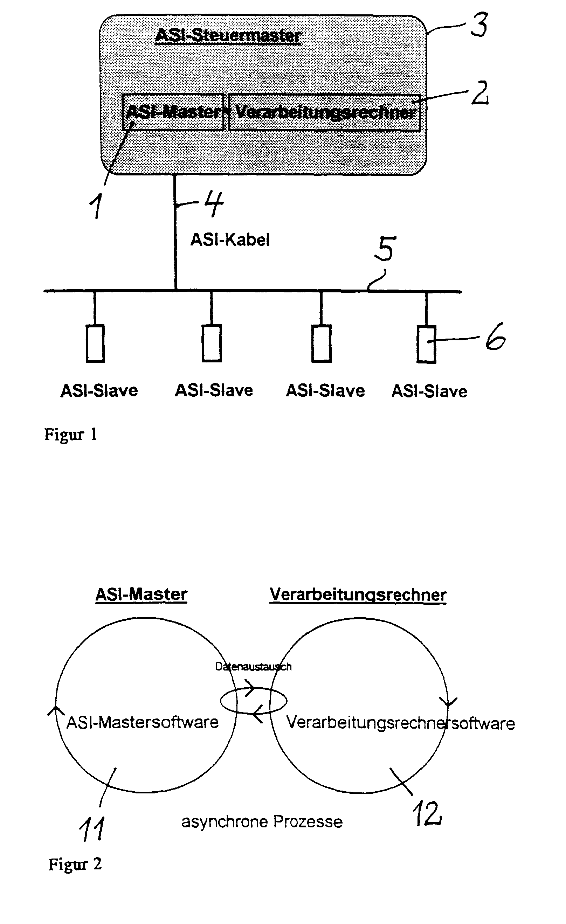

Figur 1 zeigt die Implementierung eines ASI-Masters 1 und eines Verarbeitungsrechners 2 innerhalb eines Gerätes 3, der sogenannte ASI-Steuermaster 3, der über eine Leitung 4 mit dem ASI-Kabel 5 verbunden ist, an dem eine Mehrzahl von ASI-Slaves 6 angebunden sind.

In Figur 2 ist die prinzipielle Arbeitsweise des ASI-Steuermasters mittels des implementierten ASI-Masters und des implementierten Verarbeitungsrechners dargestellt. Der ASI-Master bearbeitet seine ASI-Mastersoftware 11, der Verarbeitungsrechner bearbeitet seine Verarbeitungsrechnersoftware 12; beide asynchronen Prozesse können unabhängig voneinander sein, wie dargestellt, wobei zwischen beiden Softwareteilen ein Datenaustausch stattfindet, was durch die beide Prozesse verbindende Schleife "Datenaustausch" dargestellt ist. Dabei arbeitet die Verarbeitungsrechnersoftware fehlerfrei, auch wenn zu einem beliebigen Zeitpunkt Veränderungen im ASI-Kreis auftreten. Der zeitliche Ablauf des ASI-Masters und des Verarbeitungsrechners verläuft asynchron. Die beiden Prozesse ASI-Master und Verarbeitungsrechner können völlig autark entkoppelt arbeiten und treten dann nur zum Datenaustausch miteinander in Kontakt. Zwischen den Datenaustauschphasen können der ASI-Master und der Verarbeitungsrechner entkoppelt und autark arbeiten.

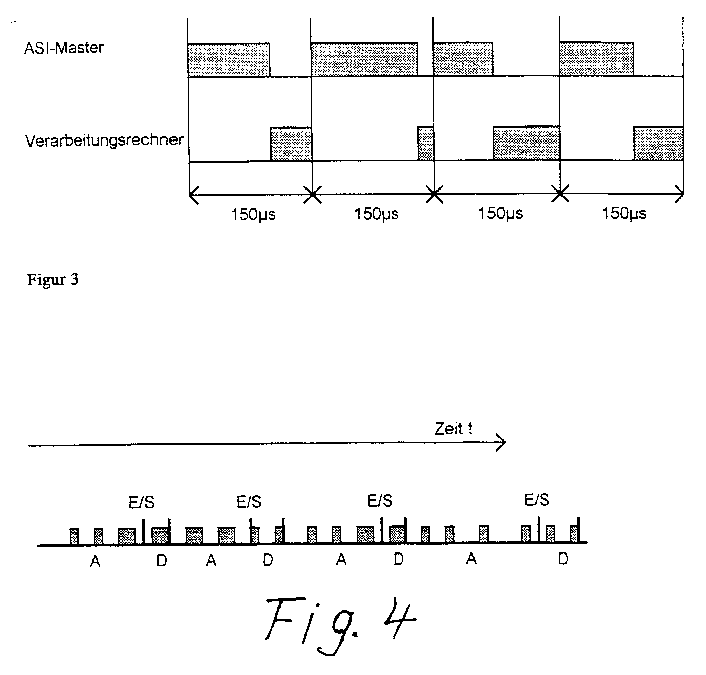

In Figur 3 ist der zyklische zeitliche Ablauf der Verarbeitungsrechnersoftware des Verarbeitungsrechner für den Fall gezeigt, daß der ASI-Steuermaster auf einem Controller realisiert ist. In der Figur 3 ist der zyklische, zeitliche Ablauf der Verarbeitungsrechnersoftware, unter Berücksichtigung der unterschiedlich großen Zeitscheiben, die dem Verarbeitungsrechner vom ASI-Master zur Verfügung gestellt werden, dargestellt. Die Zykluszeit des Verarbeitungsrechners, also die Zeit zwischen dem Beginn von zwei Datenaustauschphasen, hängt zu einem großen Teil von der zur Verfügung gestellten Rechenzeit ab.

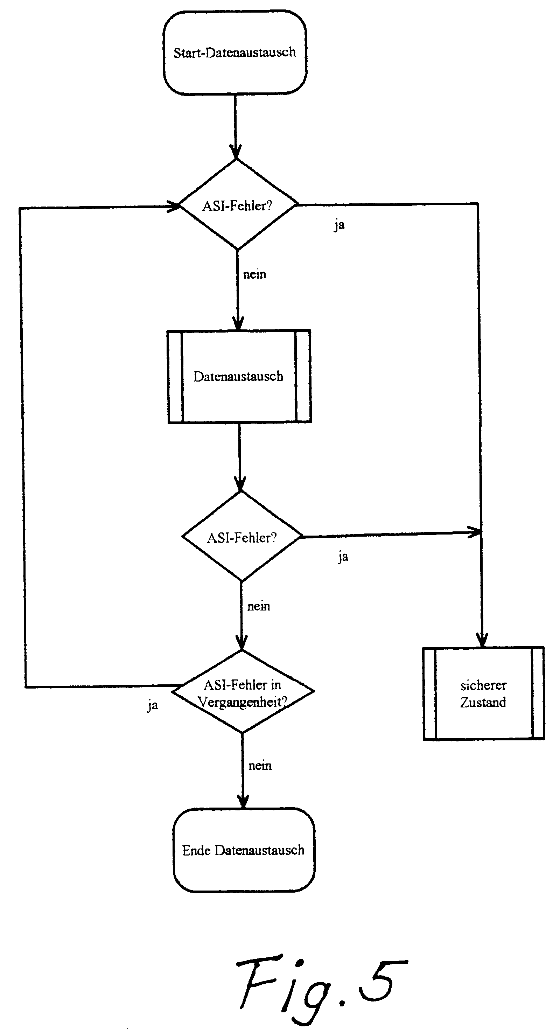

In Figur 4 ist die Aufteilung der Rechenzeit auf die beiden asynchronen Prozesse des ASI-Masters und des Verarbeitungsrechners für den Fall gezeigt, daß der ASI-Steuermaster, also ASI-Master und Verarbeitungsrechner, auf einem einzigen Controller realisiert sind. Es bedeuten:
E/S = Ende des Verarbeitungsrechnerzyklusses und Start eines neuen Verarbeitungsrechnerzyklusses
D = Datenaustausch zwischen ASI-Master und Verarbeitungsrechner
A = Abarbeitung des Verarbeitungsrechners
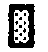 = Zeitscheiben des Verarbeitungsrechners

Dem Verarbeitungsrechner wird vom ASI-Steuermaster immer nur solange Rechenzeit zur Verfügung gestellt, wie der ASI-Master keine Rechenzeit beansprucht, also in die Lücken der Zykluszeit des ASI-Telegramms, wobei diese Lücken zeitlich unterschiedlich groß sein können. Die unterschiedlichen Längen dieser Zeitscheiben, die dem Verarbeitungsrechner zur Verfügung gestellt werden, hängen vom ASI-Master ab,

Figur 5 zeigt ein mögliches Hauptdiagramm für den Datenaustausch beginnend mit dem Start des Datenaustauschs. Nach dem Start des Datenaustauschs wird abgefragt, ob ein ASI-Fehler aufgetreten ist; bei Bejahung wird der ASI-Kreis in den sicheren Zustand gefahren. Bei Verneinung wird der Datenaustausch durchgeführt. Danach wird wieder abgefragt, ob ein ASI-Fehler aufgetreten ist, bei Bejahung wird der ASI-Fehler in der Vergangenheit abgefragt und bei dessen Bejahung in einer Schleife zurück zur ersten Frage nach dem ersten ASI-Fehler gegangen. Bei Verneinung wird das Ende des Datenaustauschs angezeigt und vollzogen.

Ein sicherer und gefahrloser Zustand bei ASI ist beispielsweise die Offline-Phase. In der Offline-Phase wird zuerst an allen ASI-Slaves ein RESET durchgeführt und danach wird die Komunikation auf der ASI-Leitung eingestellt. Nach dem RESET und dem Einstellen der Kommunikation besteht keine weitere Gefahr für eine Anlage.

### Gewerbliche Anwendbarkeit:

Der Gegenstand der Erfindung ist insbesondere für Verfahren zur Steuerung und Aktivierung von miteinander mittels eines Bussystems vernetzten binären Sensoren und/oder Aktuatoren, ASI-Slaves, anwendbar, die von einem Verarbeitungsrechner angesteuert werden und umgekehrt wobei der ASI-Master zusammen mit dem Verarbeitungsrechner in einem Gerät realisiert wird und Teile der ASI-Mastersoftware zusammen mit der Verarbeitungsrechnersoftware auf dem gleichen Controller implementiert sind. Die Nützlichkeit der Erfindung liegt einerseits darin, daß der ASI-Steuermaster Steuerungsaufgaben übernimmt, für die bei konventioneller Realisierung des Standes der Technik ein Verarbeitungsrechner zusätzlich erforderlich ist, andererseits darin, daß ein Verarbeitungsrechner zusätzlich zum ASI-Master in einem Gerät, der sogenannte ASI-Steuermaster, implementiert werden kann, ohne daß dafür zusätzliche Hardwarekosten anfallen.

## Patentansprüche

1. Verfahren zur Steuerung und Aktivierung von miteinander mittels eines Bussystems vernetzten binären Sensoren (6) und/oder Aktuatoren (ASI-Slaves), wobei die Bedienung des Bussytems von einem ASI-Master (1) und die Verarbeitung der ASI-Daten von einem Verarbeitungsrechner (2) durchgeführt wird, dadurch gekennzeichnet,
daß der ASI-Master (1) zusammen mit dem Verarbeitungsrechner (2) in einem Gerät realisiert ist und wenigstens Teile der ASI-Mastersoftware (11) zusammen mit der Verarbeitungsrechnersoftware (12) auf demselben Controller implementiert sind, wobei die Verarbeitungsrechnersoftware (12) die im Mittel von der ASI-Mastersoftware (11) zum Einhalten der ASI-Spezifikationen nicht benötigte Rechenleistung des gemeinsamen Controllers verwendet und die ASI-Mastersoftware (11) immer Priorität vor der Verarbeitungsrechnersoftware (12) besitzt zur Sicherstellung, daß die strengen Zeitanforderungen an den ASI-Master (1) eingehalten werden.

2. Verfahren nach Anspruch 1, dadurch gekennzeichnet,
daß die ASI-Mastersoftware (11) entkoppelt von der Verarbeitungsrechnersoftware (12) aufgebaut ist und die ASI-Mastersoftware (11) sowie die Verarbeitungsrechnersoftware (12) jeweils nur auf die jeweiligen lokalen Variablen zugreifen, jedoch ein Datenaustausch zwischen beiden stattfindet.

3. Verfahren nach Anspruch 1 oder 2, dadurch gekennzeichnet,
daß der ASI-Master bzw. die ASI-Mastersoftware (11) die Zykluszeit der Verarbeitungsrechnersoftware (12) ändern darf, wobei der im ASI-Steuermaster implementierte ASI-Master gegenüber dem implementierten Verarbeitungsrechner immer und zu jedem Zeitpunkt die höhere Priorität besitzt.

4. Verfahren nach Anspruch 1 oder 2, dadurch gekennzeichnet,
daß lediglich der ASI-Master (1) über eine eigene Schnittstelle nach außerhalb des ASI-Steuermasters ASI-Daten mit den ASI-Slaves austauscht, wobei der Verarbeitungsrechner (2) die ASI-Daten des Verarbeitungsrechners (2) mit dem ASI-Master austauscht, der wiederum für den gesamten Datenaustausch mit den ASI-Slaves sorgt.

5. Verfahren nach Anspruch 1 oder 2, dadurch gekennzeichnet,
daß der ASI-Kreis bei Fehlprogrammierung der Verarbeitungsrechnersoft-ware (12) weiterhin spezifikationskonform betrieben wird, so daß diese Fehlerprogrammierung den Ablauf der ASI-Mastersoftware (11) des ASI-Masters nicht beeinflußt, wobei der ASI-Master (1) den ASI-Kreis unabhängig vom Zustand der Verarbeitungsrechnersoftware (12) in einen sicheren Zustand zu versetzen imstande ist.

6. Verfahren nach Anspruch 1 oder 5, dadurch gekennzeichnet,
daß der Verarbeitungsrechner (2) auf kurzzeitige ASI-Fehler in einer vorgegebenen Art und Weise in der Verarbeitungsrechnersoftware (12) zu reagieren imstande ist.

7. Verfahren nach Anspruch 1 oder 2, dadurch gekennzeichnet,
daß der zyklische Aufruf der ASI-Mastersoftware (11) mit Hilfe eines Watchdog überwacht wird.

8. Verfahren nach Anspruch 1 oder 2, dadurch gekennzeichnet,
daß der Datenaustausch zwischen ASI-Master und Verarbeitungsrechner (2) in einer Art geschieht, daß Datenkonsistenz sichergestellt ist, wozu beim Austausch zwischen ASI-Master und Verarbeitungsrechner (2) zur Sicherstellung der Konsistenz zwischen ASI-Daten und ASI-Flags der ASI-Master die ASI-Daten und die ASI-Flags vor der Übertragung zum Verarbeitungsrechner (2) einfriert, also nicht mehr verändert, zum Beispiel zwischenspeichert, und diese zueinander konsistenten ASI-Daten und ASI-Flags an den Verarbeitungs-rechner überträgt.

9. Verfahren nach Anspruch 1 oder 8, dadurch gekennzeichnet,
daß bei einer Fehlererkennung durch den ASI-Master ein zusätzliches Fehlerbit gesetzt wird, welches nur vom ASI-Master gesetzt werden und nur vom Verarbeitungsrechner (2) gelöscht bzw. quittiert werden darf, und Fehler gespeichert werden, wobei durch das Speichern von Fehlern durch die Verarbeitungsrechnernsoftware (12) eine Konsistenz der ASI-Daten beim Datenaustausch zwischen dem Verarbeitungsrechnern (2) und dem ASI-Master (1) erreicht wird.

10. Verfahren nach Anspruch 1 oder 2, dadurch gekennzeichnet,
daß innerhalb des ASI-Steuermasters die Prozeßdaten zweimal unabhängig voneinander abgelegt und verwaltet werden, wobei die ASI-Mastersoftware und die Verarbeitungsrechnersoftware immer nur auf ihren zugewiesenen eigenen Datenbereich zugreifen kann und die ASI-Daten der beiden Softwareteile zu vorgebbaren Zeitpunkten ausgetauscht werden.

11. Vorrichtung zur Steuerung und Aktivierung von miteinander mittels eines Bussystems vernetzten binären Sensoren (6) und/oder Aktuatoren (ASI-Slaves), mit einem ASI-Master (1) zur Bedienung des Bussytems und einem Verarbeitungsrechner (2) zur Verarbeitung der ASI-Daten des ASI-Masters (1), dadurch gekennzeichnet,
daß der ASI-Master (1) zusammen mit dem Verarbeitungsrechner (2) in einem Gerät realisiert ist und wenigstens Teile der ASI-Mastersoftware (11) zusammen mit der Verarbeitungsrechnersoftware (12) auf demselben Controller implementiert sind, wobei die Verarbeitungsrechnersoftware (12) die im Mittel von der ASI-Mastersoftware (11) zum Einhalten der ASI-Spezifikationen nicht benötigte Rechenleistung des gemeinsamen Controllers verwendet und die ASI-Mastersoftware (11) immer Priorität vor der Verarbeitungsrechnersoftware (12) besitzt zur Sicherzustellung der strengen Zeitanforderungen an den ASI-Master (1), und die ASI-Mastersoftware (11) entkoppelt von der Verarbeitungsrechnersoftware (12) aufgebaut ist und die ASI-Mastersoftware (11) sowie die Verarbeitungsrechnersoftware (12) jeweils nur auf die jeweiligen lokalen Variablen zugreifen, jedoch ein Datenaustausch zwischen beiden stattfindet.

12. Vorrichtung nach Anspruch 11, dadurch gekennzeichnet,
daß der Verarbeitungsrechner als autarker Verarbeitungsrechner innerhalb des ASI-Masters integriert, aber getrennt aufgebaut ist und der im ASI-Steuermaster implementierte ASI-Master gegenüber dem implementierten Verarbeitungs-rechner immer und zu jedem Zeitpunkt die höhere Priorität besitzt.

13. Vorrichtung nach Anspruch 11 oder 12, dadurch gekennzeichnet,
daß der ASI-Master und der Verarbeitungsrechner in einem Gerät, jedoch auf zwei verschiedenen Controllern realisiert sind.

14. Vorrichtung nach Anspruch 11 oder 12, dadurch gekennzeichnet,
daß mehr als ein Verarbeitungsrechner (2) vorhanden ist und ein ASI-Master (1) mit den mehreren Verarbeitungsrechnern (2) zusammenarbeitet.

15. Vorrichtung nach Anspruch 11, dadurch gekennzeichnet,
daß ASI-Master und Verarbeitungsrechner eine definierte Schnittstelle besitzen und die Prozesse der beiden entkoppelt sind, wobei lediglich der ASI-Master über seine Schnittstelle nach außerhalb des ASI-Steuermasters ASI-Daten mit den ASI-Slaves austauscht, und der Verarbeitungsrechner die ASI-Daten der Verarbeitungsrechnersoftware mit dem ASI-Master austauscht, der wiederum für den gesamten Datenaustausch auf den ASI-Kreis mit den ASI-Slaves sorgt.

## Claims

1. Process for controlling and activating binary sensors (6) and/or actuators (ASI slaves) that are linked to each other by a bus system, whereby the operation of the bus system is effectuated by an ASI master (1) and the processing of the ASI data is carried out by a processing computer (2), characterized in that
the ASI master (1), together with the processing computer (2), is combined in one device and at least parts of the ASI master software (11), together with the processing computer software (12), are implemented on the same controller, whereby the processing computer software (12) uses the average computing capacity of the shared controller that is not needed by the ASI master software (11) to comply with the ASI specifications and the ASI master software (11) always has priority over the processing computer software (12) in order to ensure that the strict time requirements made of the ASI master (1) are met.

2. Process according to Claim 1, characterized in that
the ASI master software (11) is set up so as to be uncoupled from the processing computer software (12) and the ASI master software (11) as well as the processing computer software (12) each only access the local variables, but a data exchange takes place between both of them.

3. Process according to Claim 1 or 2, characterized in that
the ASI master or ASI master software (11) is permitted to change the cycle time of the processing computer software (12), whereby the ASI master implemented in the ASI control master always and at every point in time has the higher priority vis-à-vis the implemented processing computer.

4. Process according to Claim 1 or 2, characterized in that
only the ASI master (1) exchanges ASI data with the ASI slaves via its own interface to outside of the ASI control master, whereby the processing computer (2) exchanges the ASI data of the processing computer (2) with the ASI master which, in turn, ensures the entire data exchange with the ASI slaves.

5. Process according to Claim 1 or 2, characterized in that,
in case of incorrect programming of the processing computer software (12), the ASI circuit continues to be operated in conformity with the specifications, so that this incorrect programming does not influence the course of the ASI master software (11) of the ASI master, whereby the ASI master (1) is capable of putting the ASI circuit into a safe state, irrespective of the status of the processing computer software (12).

6. Process according to Claim 1 or 5, characterized in that
the processing computer (2) is capable of responding to brief ASI errors in a prescribed manner in the processing computer software (12).

7. Process according to Claim 1 or 2, characterized in that
the cyclic loading of the ASI master software (11) is monitored by means of a watchdog.

8. Process according to Claim 1 or 2, characterized in that
the data exchange between the ASI master and the processing computer (2) takes place in such a way that data consistency is ensured, for which purpose, during the exchange between the ASI master and the processing computer (2), in order to ensure the consistency between the ASI data and the ASI flags, the ASI master freezes the ASI data and the ASI flags before transmitting them to the processing computer (2), that is to say, no longer changes them, for example, by storing them temporarily, and then transmits these ASI data and these ASI flags, which are consistent with each other, to the processing computer.

9. Process according to Claim 1 or 8, characterized in that,
in case an error is recognized by the ASI master, an additional error bit is placed, which can only be placed by the ASI master, and which is only permitted to be deleted or acknowledged by the processing computer (2), and errors are stored, whereby the storage of errors by the processing computer software (12) results in a consistency of the ASI data during the data exchange between the processing computer (2) and the ASI master (1).

10. Process according to Claim 1 or 2, characterized in that,
within the ASI control master, the process data are stored and managed twice independently of each other, whereby the ASI master software and the processing computer software can always only access the data sector assigned to them and the ASI data of the two software parts are exchanged at predefinable points in time.

11. Device for controlling and activating binary sensors (6) and/or actuators (ASI slaves) that are linked to each other by a bus system, with an ASI master (1) for operating the bus system and a processing computer (2) for processing the ASI data of the ASI master (1), characterized in that
the ASI master (1), together with the processing computer (2), is combined in one device and at least parts of the ASI master software (11), together with the processing computer software (12), are implemented on the same controller, whereby the processing computer software (12) uses the average computing capacity of the shared controller that is not needed by the ASI master software (11) to comply with the ASI specifications and the ASI master software (11) always has priority over the processing computer software (12) in order to ensure compliance with the strict time requirements made of the ASI master (1), and the ASI master software (11) is set up so as to be uncoupled from the processing computer software (12) and the ASI master software (11) as well as the processing computer software (12) each only access the local variables, but a data exchange takes place between both of them.

12. Device according to Claim 11, characterized in that
the processing computer is integrated as an autonomous processing computer within the ASI master, but is set up separately, and the ASI master implemented in the ASI control master always and at every point in time has the higher priority vis-à-vis the implemented processing computer.

13. Device according to Claim 11 or 12, characterized in that
the ASI master and the processing computer are combined in one device, but on two different controllers.

14. Device according to Claim 11 or 12, characterized in that
more than one processing computer (2) is present and an ASI master (1) works together with the multiple processing computers (2).

15. Device according to Claim 11, characterized in that
the ASI master and the processing computer have a defined interface and the processes of both of them are uncoupled, whereby only the ASI master exchanges ASI data with the ASI slaves via its own interface to outside of the ASI control master, and the processing computer exchanges the ASI data of the processing computer software with the ASI master which, in turn, ensures the entire data exchange on the ASI circuit with the ASI slaves.

## Revendications

1. Procédé permettant de commander et d'activer des détecteurs binaires (6) et/ou des organes d'actionnement (esclaves AS-Interface) reliés entre eux au moyen d'un système de bus, l'utilisation du système de bus étant effectuée par un maître AS-Interface (1) et le traitement des données AS-Interface étant effectué par un calculateur de traitement (2),
caractérisé en ce
que le maître AS-Interface (1) et le calculateur de traitement (2) sont réalisés ensemble dans un appareil et qu'au moins une partie du logiciel du maître AS-Interface (11) est implantée dans le même contrôleur que le logiciel du calculateur de traitement (12), le logiciel du calculateur de traitement (12) utilisant la capacité de calcul moyenne du contrôleur commun qui n'est pas nécessaire au logiciel du maître AS-Interface (11) pour le respect des spécifications AS-Interface et le logiciel du maître AS-Interface (11) ayant toujours priorité devant le logiciel du calculateur de traitement (12), afin d' assurer le respect des strictes contraintes de temps par le maître AS-Interface (1).

2. Procédé selon la revendication 1,
caractérisé en ce
que le logiciel du maître AS-Interface (11) est construit séparément du logiciel du calculateur de traitement (12) et que le logiciel du maître AS-Interface (11) comme le logiciel de calculateur de traitement (12) se sert à chaque fois uniquement des variables locales respectives. un échange de données entre les deux ayant toutefois lieu.

3. Procédé selon la revendication 1 ou 2,
caractérisé en ce
que le maître AS-Interface, ou encore le logiciel du maître AS-Interface (11), est autorisé à modifier le temps de cycle du logiciel du calculateur de traitement (12), le maître AS-Interface implanté dans le maître de commande AS-Interface possédant, toujours et à chaque instant, la plus haute priorité devant le calculateur de traitement implanté.

4. Procédé selon la revendication 1 ou 2,
caractérisé en ce
que seul le maître AS-Interface (1) échange vers l'extérieur du maître de commande AS-Interface, gràce à une interface propre, des données AS-Interface avec les esclaves AS-Interface, le calculateur de traitement (2) échangeant les données AS-Interface du calculateur de traitement avec le maître AS-Interface, qui à son tour se charge de l'échange global des données avec les esclaves AS-Interface

5. Procédé selon la revendication 1 ou 2,
caractérisé en ce
que le réseau AS-Interface, lors d'erreurs de programmation du logiciel du calculateur de traitement (12), continuera de fonctionner conformément aux spécifications, de telle sorte que ces erreurs de programmation n'influent pas sur l'éxecution du logiciel du maître AS-Interface, le maître AS-Interface (1) étant en mesure de mettre le réseau AS-Interface dans un état sûreté, indépendamment de l'état du logiciel du calculateur de traitement.

6. Procédé selon la revendication 1 ou 5,
caractérisé en ce
que le calculateur de traitement (2) est en mesure de réagir, d'une manière prédefinie dans le logiciel du calculateur de traitement (12), aux erreurs AS-Interface de courte durée.

7. Procédé selon la revendication 1 ou 2,
caractérisé en ce
que l'appel cyclique du logiciel du maître AS-Interface (11) sera surveillé avec l'aide d'un chien de garde.

8. Procédé selon la revendication 1 ou 2,
caractérisé en ce
que l'échange des données entre le maître AS-Interface et le calculateur de traitement (2) se produit de telle sorte que la cohérence des données est assurée, les données AS-Interface et les drapeaux AS-Interface étant, lors d'échanges entre le maître AS-Interface et le calculateur de traitement (2) afin d'assurer la cohérence entre les données AS-Interface et les drapeaux AS-Interface du maître AS-Interface, bloqués avant la transmission au calculateur de traitement (2), c'est à dire plus modifiables ( par exemple. sauvegarde intermédiaire) et que ces données AS-Interface et ces drapeaux AS-Interface. cohérents entre eux, étant transmis au calculateur de traitement.

9. Procédé selon la revendication 1 ou 8,
caractérisé en ce
que lors d'une détection d'erreurs par le maître AS-Interface, un bit d'erreur supplémentaire est activé, celui-ci ne pouvant être activé que par le maître AS-Interface et n'être effacé ou encore acquitté que par le calculateur de traitement (2), et que les erreurs sont sauvegardées, la cohérence des données AS-Interface, lors d'un échange de donnees entre le calculateur de traitement(2) et le maître AS-Interface (1), résultant de la sauvegarde des erreurs par le logiciel du calculateur de traitement (12).

10. Procédé selon la revendication 1 ou 2,
caractérisé en ce
qu'à l'intérieur du maître de commande AS-Interface, les données de processus sont gérées et stockées indépendamment les unes des autres deux fois, le logiciel du maître AS-Interface et le programmme du calculateur de traitement ne pouvant traiter que leur propre domaine de données qui leur est attribué, et que les données AS-Interface des deux parties de logiciel sont échangées des instants prédéfinis.

11. Dispositif permettant de commander et d'activer des détecteurs binaires (6) et/ou des organes d'actionnement reliés entre eux au moyen d'un système de bus, avec un maître AS-Interface (1) pour l'utilisation du système de bus et un calculateur de traitement (2) pour le traitement des données AS-Interface du maîtreAS-Interface (1),
caractérisé en ce
que le maître AS-Interface(1) et le calculateur de traitement (2) sont réalisés ensemble dans un appareil et qu'au moins une partie du logiciel du maître AS-Interface (11) est implantée dans le même contrôleur que le logiciel du calculateur de traitement (12), le logiciel du calculateur de traitement (12) utilisant la capacité de calcul moyenne du contrôleur commun, qui n'est pas nécessaire au logiciel maître AS-Interface (11) pour le respect des spécifications AS-Interface et le logiciel du maître AS-Interface (11) ayant toujours, afin d'assurer le respect des strictes contraintes de temps par le maître AS-interface (1), priorité devant le logiciel du calculateur de traitement (12),et que le logiciel du maître AS-Interface (11) est construit séparément du logiciel du calculateur de traitement (12) et que le logiciel du maître AS-Interface (11) comme le logiciel de calculateur de traitement (12) se sert à chaque fois uniquement des variables locales respectives, un échange de données entre les deux ayant toutefois lieu.

12. Dispositif selon la revendication 11,
caractérisé en ce
que le calculateur de traitement est intégré en tant que calculateur de traitement autarcique à l'intérieur du maître AS-Interface, mais construit séparément, et que le maître AS-Interface, implanté dans le maître de commande AS-Interface, possède toujours et à chaque instant, devant le calculateur de traitement implanté, la plus haute priorité.

13. Dispositif selon la revendication 11 ou 12,
caractérisé en ce
que le maître AS-Interface et le calculateur de traitement sont réalisés dans un même appareil, mais cependant avec deux contrôleurs distincts.

14. Dispositif selon la revendication 11 ou 12,
caractérisé en ce
qu'il existe plus d'un calculateur de traitement (2) et qu'un maître AS-Interface (1) travaille avec ces calculateurs de traitement (2).

15. Dispositif selon la revendication 11,
caractérisé en ce
que le maître AS-Interface et le calculateur de traitement possèdent une interface définie et que les processus des deux sont séparés, le maître AS-Interface échangeant seul vers l'extérieur du maître de commande AS-Interface, grâce à son interface, des données AS-Interface avec les esclaves AS-Interface et que le calculateur de traitement échange des données AS-Interface du logiciel du calculateur de traitement avec le maître AS-Interface, qui se charge son tour de l'ensemble des échanges de données sur le réseau AS-Interface avec les esclaves AS-Interface.
